# EUROPEAN PATENT SPECIFICATION

(11) **EP 0 499 816 B1**
(45) Date of publication and mention of the grant of the patent: **08.11.1995**
(21) Application number: 92101079.9
(22) Date of filing: 23.01.1992
(51) Int. Cl.: E04B 1/68, B29C 47/00

(54) **A molded sealing plate for concrete structures**
Geformte Abdichtungsplatte für Betonbau
Plaque d'étanchéité moulée pour des structures en béton

(30) Priority: 20.02.1991 JP 45720/91
(43) Date of publication of application: 26.08.1992
(73) Proprietor: Mori, Yasuhiro, Kamakura-shi, Kanagawa (JP)
(72) Inventor: Mori, Yasuhiro, Kamakura-shi, Kanagawa (JP)
(74) Representative: Prüfer, Lutz H., Dipl.-Phys.

(56) References cited:
- EP-A- 0 037 717
- CH-A- 369 784
- FR-A- 1 231 692
- PATENT ABSTRACTS OF JAPAN, vol. 9, no 14 (M-352)(1737), 22 January 1985 & JP-A-59 164 115 (FUJIKURA DENSEN K.K.) 17 september 1984

## Description

The present invention relates to a sealing plate for concrete structures to be placed at the joints of concrete structures to prevent water seepage, according to the first part of claim 1, and to a process of manufacturing such a sealing plate.

After pouring and curing of concrete during construction of concrete structures in general, concrete is likely to undergo cracking due to internal stresses caused by changes in the ambient temperature, humidity, pressure and the like. To prevent this, the structure to be poured with concrete is divided into sections of a suitable length with a joint in between each section. These joints, however, may permit seepage of water such as rain and groundwater into the structure. As one of the most popular means to prevent cracking of concrete as well as water seepage into concrete, sealing or cutoff plates of metal, rubber or synthetic resin are embedded in the concrete along the length of the joint at the time of pouring concrete to ensure water sealing performance thereof.

Among such sealing plates, those made of metal lack both ductility and elasticity, such that they cannot accommodate themselves to volume changes in the poured concrete and gaps easily develop between the poured concrete and the sealing plate.

Sealing plates made of a molding with sealing performance and comprising rubber or synthetic resin, on the other hand, are advantageous in that because of their high elasticity they are more accommodating to volume changes in the concrete and to displacements at the joints. Sealing plates of this type generally comprise a plate made of elastomer and the like provided with a cylindrical or pyramidal portion in the longitudinal direction at the center and a flange on both edges which is thicker than the plate to ensure a firm engagement with the concrete. Said cylindrical or pyramidal portion of the sealing plate absorbs the external changes such as displacement of concrete at the joints, while the flanges and both edges with their firm engagement with the concrete prevent water seepage.

Sealing plates made of a rubber-base molding are defective in that despite their elasticity they easily deteriorate with time due to aging, and after a certain period of use, they no longer function properly as a sealing plate.

Sealing plates made of a molding comprising synthetic resin such as polyvinylchloride and ABS resin are defective in that because the plate surface is inevitably made smooth at the stage of molding, adhesion between the plate surface and the concrete tends to decrease, although in this case the problem of deterioration does not occur. For these reasons, the prior art sealing plates made of a molding comprising synthetic resins are provided with flanges on both edges of the plate to improve the engagement with the concrete as well as to prevent water seepage. In that sense, the prior art sealing plates depend exclusively on pneumatic features such as flanges to improve the engagement with the concrete.

Instead of relying on the flanges provided on both edges of the sealing plate to improve engagement with the concrete as mentioned above, document EP-A-0 037 717 proposes a sealing plate according to the first part of claim 1 and employing a water-swellable material made of water-absorbent resin such as bentonite. However, the water-swellable material merely plugs the gap between the sealing or cutoff plate and the concrete as it swells by coming into contact with water seeped in said gap, and it fails to cause the concrete to adhere to the cutoff plate.

Because synthetic resin plates hardly become bonded with the concrete, the prior art cutoff plates made of synthetic resins were provided with flanges on both edges to improve their engagement with the concrete as well as watertight performance. However, it was conceived to improve this engagement between the plate and the concrete by forming the entire surface of the plate irregular instead of using the flanges which provide only partial engagement. The newly proposed method may not offer adhesion by chemical fusion between the synthetic resin plate and the concrete but will significantly improve the water sealing property by causing the entire surface of the plate to uniformly come into contact with the concrete.

As one possible means to form a rugged surface on the synthetic resin plate which constitutes the base of a cutoff plate, the resin plate may be passed through embossing rolls immediately after molding. Although this is applicable when the cutoff plate is flat, a cutoff plate with special configuration such as those provided with cylindrical portions or with flanges cannot be passed through the embossing rolls, as these projecting portions would get in the way and the plate cannot be treated for rugged finish on its entire surface.

To overcome these problems, it was proposed to spray the surface of such cutoff plate with an adhesive and to sprinkle with siliceous sand over the adhesive. This is also defective in that it requires additional means to sprinkle the siliceous sand and does not offer an adequate solution in view of cost and efficiency. Further, the rugged surface alone cannot help the concrete to adhere to the plate because the resin material has a water repelling property and thus prevents the cement milk from adequately entering and filling the dents in the rugged surface. The effect of the rugged surface is therefore somewhat offset.

Document JP-A-59-164115 discloses a plastic tape for a power cable comprising a base resin having a filling particulate therein and an embossed rough outer surface. This tape is made by extrusion molding.

The present invention aims to solve the above-mentioned problems encountered in the prior art sealing plates made of synthetic resins and to provide a sealing or cutoff plate and a process of manufacturing thereof, wherein the surface of the sealing or cutoff plate can efficiently be made rugged at the stage of producing the plate without relying on a secondary post-molding process and the rugged or embossed surface acts to improve the adhesion between the cement milk and the plate.

This object is achieved by a sealing plate as defined in claim 1 and a process for manufacturing a sealing plate as defined in claim 7, respectively.

The stock material for preparing the molding with cutoff performance according to the present invention comprises 60 - 70 wt% of a thermoplastic resin as the matrix, 30 - 40 wt% of a non-melting particulate substance, 0.3 - 10 wt% of surfactant, and preferably 67 wt% of the matrix resin, 30 wt% of non-melting particulate substance and 0.3 wt% of surfactant.

Embossed rugged surfaces to be formed on both the front and the back of a resin plate to be molded become too rugged if the ratio of matrix resin as against that of non-melting particulate substance is too large, making it impossible for the cement milk to adequately enter and fill the dents on the embossed surfaces. This may leave air bubbles in the gap between the resin plate and the concrete. The ratio of non-melting particulate substance as against matrix resin is preferably less than half that of matrix so that the adequate ruggedness of the surface can be maintained.

The surfactant contained in the stock material for molding the resin plate forms a hydrophilic coating layer on the embossed rugged surface, and whereby the contact between the cement milk and the resin plate is positively enhanced to allow the cement milk to adequately enter and fill the dents on the surface. This results in firm bonding between the cutoff plate and the concrete.

Other objects and advantages of this invention will become apparent when taken in conjunction with description herebelow of some embodiments shown in the accompanying drawings.

Fig. 1 is a partial perspective view to show the construction of a cutoff plate made from the molding according to one embodiment of the present invention.

Fig. 2 is a partial enlarged sectional view along the line II-II in Fig. 1.

Fig. 3 is a sectional view to show the process of forming the molding with cutoff performance according to the present invention.

Fig. 4 is a perspective view to show how the cutoff plate shown in Fig. 1 is used.

Fig. 5 is a perspective view to show another example of how the cutoff plate is used.

Fig. 6 is a perspective view to show another embodiment of a cutoff plate made from the molding of the present invention.

Fig. 7 is a perspective view to show another mode of use of the cutoff plate as a variation of that shown in Fig. 5.

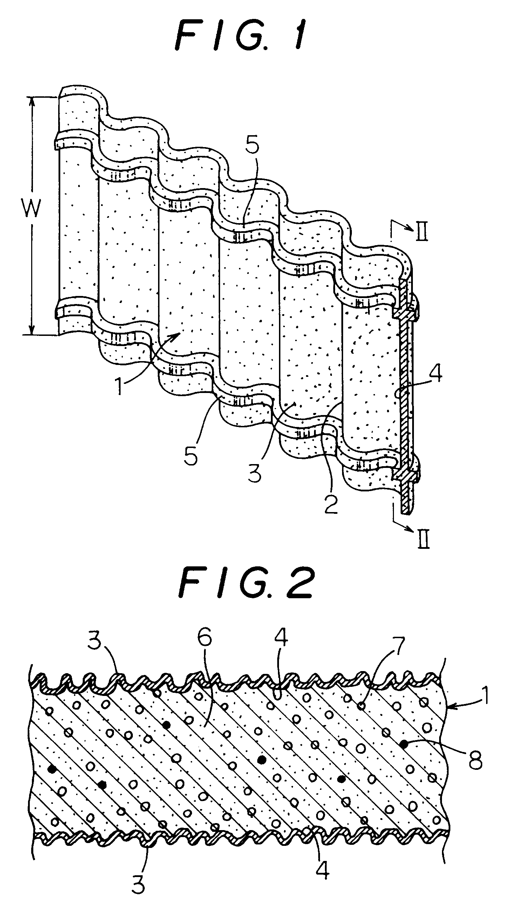

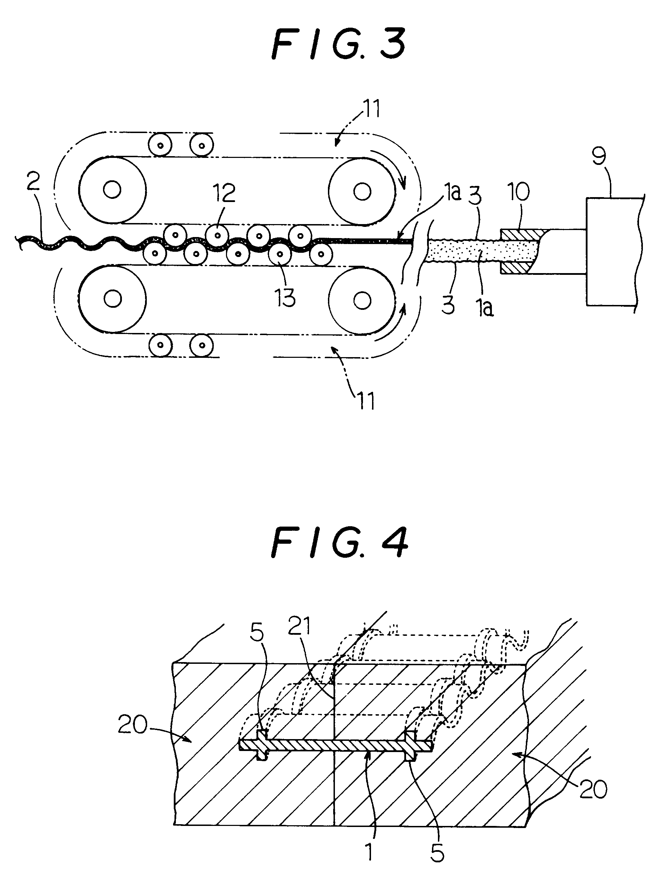

Preferred embodiments of the cutoff plate made from the molding of the present invention will now be described referring to the accompanying drawings. As shown in Fig. 1, a cutoff plate 1 is an elongated plate made from a molding with cutoff performance obtained by extrusion-molding a synthetic resin composition and has embossed surfaces 3 on both faces with plural dents. The cutoff plate 1 has a given width W suitable for the plate to be placed at a joint 21 of a concrete structure 20. Its entire surface 2 is preferably provided with transverse corrugations, and one or more ridges 5 are provided on both edges of the plate 1 extending in the longitudinal direction thereof, as shown in Fig. 4. The embossed surface 3 each is coated with a hydrophilic layer 4, as shown in Fig. 2.

The staring stock material for forming the molding for the cutoff plate 1 comprises, for example, a matrix of thermoplastic resin 6 such as polyethylene resin, a non-melting particulate substance 7 such as crosslinked polyethylene resin which has a higher melting point than said matrix resin 6 and which is difficult to melt at the melting temperature condition of the matrix resin 6, and a surfactant 8. The stock material is subjected to extrusion-molding in an extruder 9 shown in Fig. 3 to be molded into a product such as shown in Fig. 1.

As a method to give embossed surfaces 3 on both faces of a product such as the molding with cutoff performance according to the present invention, a method for extrusion-molding synthetic resins is disclosed in the Japanese Patent No. 1566160 (Japanese Patent Publication Hei 1-49100) granted to the inventors of this application. The method for manufacturing moldings according to said patent is characterized in that a particulate synthetic resin of polymeric compound as the main component and a particulate synthetic resin obtained by pulverizing a composition of crosslinked resin as an additive are mixed by stirring and heated to a molten state at a given temperature, the mixture of thus-obtained resins is placed into a die and made to conform to a given configuration, the mixture of thus-conformed resins is extruded from the die by releasing the molding pressure, whereupon the molding is provided with embossed surfaces as a result of difference in the flow viscosity of each resin material caused by the difference in their melting points.

The molding with cutoff performance according to the present invention is molded from a stock material which comprises polyethylene, polypropyrene, polyvinyl chloride or the like as the matrix resin of polymeric compound, a non-melting inorganic particulate substance such as the crosslinked polyethylene resin, siliceous sand, crushed glass, fly ash and the like, and an ester of fatty acid as the ionic surfactant or block polymer or the like such as polyethylene oxide or polypropyrene oxide as the nonionic surfactant. Among said components, polyethylene resin, crosslinked polyethylene resin and higher ester of fatty acid are preferably used as the matrix resin, non-melting particulate substance and surfactant, respectively. The stock material for molding preferably contains 63 wt% of polyethylene resin, 30 wt% of crosslinked polyethylene and 0.3 wt% of surfactant such as a higher ester of fatty acid.

When the stock material is subjected to pressurization in an extrusion molder 9 while being heated to about 190°C to melt, the matrix resin 6 would become molten first at 120°C. Because of a higher melting point than that of the matrix or because of the non-melting nature, the non-melting particulate substance 7 will not be totally melted, and the surface of unmelted particles 7 becomes enveloped by said molten surfactant 8 and the matrix resin 6. The molten mixture containing such particles is charged into a die 10 maintained at about 150°C and molded into a given configuration.

The molten mixture inside the molding die 10 contains the fully molten and highly fluid matrix resin 6 and the particles of the non-melting substance 7 which is soft due to heating but is not fully molten or not molten at all and thus is less fluid. As a result, when the molten matrix is extruded into the air from the die 10, the resin contained in the inner side of the molder 9 flows out with a relative ease under the extrusion force of the molder 9. However, at positions nearer toward the outer side, said less fluid non-melting particulate substance 7 is in contact with the inner peripheral surface of the die 10 when being extruded. This makes it more difficult for the resin 7 to flow because of the friction and resistance of the die 10. In other words, because of difference in the flowability between the resins on the inner side and that on the outer side of the die 10, the resin on the outer side does not come out smoothly from the orifice, leaving rugged embossed surface 3 on the molded product.

The surfactant 8 contained in the stock material becomes well mixed with the resins during agitation inside the molder 9 and would seep and form said hydrophilic coating layer 4 which would not repel water on the embossed surface 3 when the stock material is extruded from the die 10. In Fig. 2, the hydrophilic layer 4 is shown as if it forms an independent layer on the embossed surface 3. In reality, however, the hydrophilic coating 4 is not a thick layer which would fill the dents of the embossed surface 3 but is a very thin layer and therefore, would not impair the function or the shape of the embossed surface 3 on the molding with cutoff performance to be used as the cutoff plate 1.

The molding with cutoff performance is obtained in the form of a continuous sheet 1a by extrusion molding using the die 10. Before the sheet 1a is completely cooled, it is passed through a corrugating conveyor 11 comprising upper conveyor rollers 12 and lower conveyor rollers 13 in a staggered arrangement to corrugate the sheet 1a. While the sheet 1a travels for a given distance through the rollers, it is gradually cooled and hardened to obtain the cutoff plate 1.

When the content of the non-melting particulate substance 7 is less than half the content of the matrix resin 6, the ruggedness of the embossed surface 3 becomes relatively low, such that when the cement milk is adhered on the embossed surface 3, the air bubbles contained in the cement milk are less likely to remain in the dents of the embossed surface 3. This is preferable because the concrete will adequately adhere on the surface of the cutoff plate 1.

The hydrophilic coating layer 4 to be formed on the embossed surface 3 acts to reduce the surface tension of the cutoff plate 1 made from the molding with cutoff performance, to thereby suppress water repellency unique to resin products in general. When the cement milk contacts the embossed surface 3 covered with the hydrophilic coating layer 4, the hydrophilic layer 4 actively causes the water content of the cement milk to be adsorbed in the dents of the irregular embossed surface 3 as well as acts to remove the air bubbles formed in the cement milk. As the cement milk infiltrates into the embossed surface 3 via the hydrophilic layer 4 and becomes adequately bonded with the surface 3, the concrete layer becomes locked and bonded with the cutoff plate 1 on its rugged surface. Moreover, because the contact area is significantly increased, adhesion of concrete is further enhanced.

Corrugation of the cutoff plate 1 is expected to further improve adhesion of concrete to the embossed surface 3 because of its increased surface area in addition to said improved adhesion brought about by the embossed surface 3. The cutoff plate 1 will exhibit high resistance to displacement at the concrete joint. The ridges 5 continuously provided in the longitudinal direction of the plate 1 on both edges will enhance engagement of the plate 1 with the concrete together with the adhesion on the surface of the plate 1. The ridges also act to cut off water seepage.

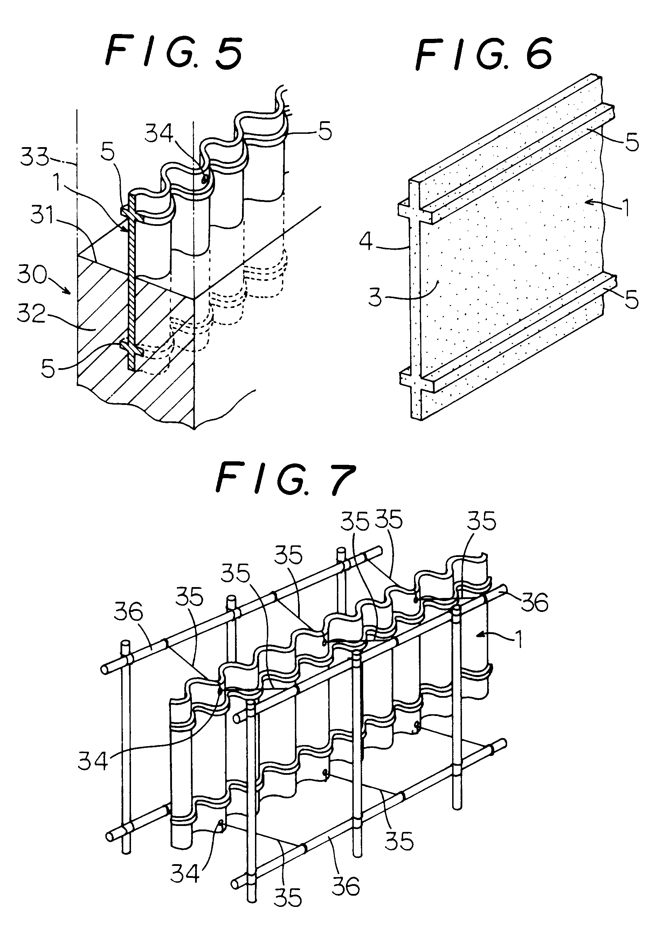

As one example of use of the cutoff plate 1 according to the present invention, the plate can be disposed horizontally at a joint 21 of a concrete structure 20, as shown in Fig. 4. Alternatively as shown in Fig. 5, the plate 1 can be vertically placed at a joint 31 of a concrete structure 30. Referring to Fig. 5, the cutoff plate 1 is vertically pressed into freshly poured concrete 32 to the mid point of its height. After this lower portion 32 of concrete is hardened, the upper portion 33 of concrete is poured. Fig. 7 shows a modification of Fig. 5. Prior to freshly pouring the lower portion 32 of concrete, the cutoff plate 1 provided with holes 34 on both edges is suspended by a wire 35 each to the correct position. Upon positioning of the plate 1, the lower portion 32 of concrete is poured and hardened before the upper portion 33 of concrete is poured. When compared with the method of Fig. 5 wherein the cutoff plate 1 is pressed into the fresh concrete 32, the method shown in Fig. 7 is more effective as the plate 1 can be placed more accurately at the joint.

Although the present invention has been described with respect to an embodiment having corrugated configuration, the cutoff plate 1 need not have a corrugated structure so long as its surface is embossed and coated with a hydrophilic layer. The cutoff plate 1 may be a flat sheet without corrugation such as shown in Fig. 6. The cutoff plate 1 may also be a flat sheet provided with ridge-like projections at a given interval. Because the molding with cutoff performance according to the present invention is intended to prevent water seepage by virtue of its improved bonding with concrete, it can be used in any other forms in addition to said cutoff plate so long as it is used for such purposes. For example, it can be applied by means of an adhesive to various metal products such as steel pipe that are embedded in concrete to protect such products against corrosion.

## Claims

1. A moulded sealing plate for concrete structures, comprising a thermoplastic resin as a matrix and a particulate substance having a melting point which is higher than the melting point of the matrix,
characterized in that the matrix resin has embossed surfaces on both faces thereof, and that the embossed surfaces are coated with a hydrophilic layer of a surfactant.

2. A sealing plate according to claim 1,
characterized in that the matrix resin comprises a polyethylene resin and the particulate substance comprises particles of crosslinked polyethylene which has a higher melting point than the matrix resin.

3. A sealing plate according to claim 2,
characterized by comrising 60 ∼ 70 weight % of matrix polyethylene resin, 30 ∼ 40 weight % of particles of crosslinked polyethylene resin, and 0,3 ∼ 10 weight % of an ester of fatty acid.

4. A sealing plate according to claim 1,
characterized by comprising a polyethylene resin as the matrix material, and inorganic particles such as sand as the particulate substance.

5. A sealing plate according to any of the claims 1 to 4,
characterized in that the sealing plate is formed as a continuous resin sheet which is provided with transverse corrugations, and has one or more continuous ridges provided on both edges of the sheet in the longitudinal direction.

6. A sealing plate according to any of the claims 1 to 4,
characterized by being formed as a continuous flat resin sheet having one or more continuous ridges provided on both edges of the sheet in the longitudinal direction.

7. A process for manufacturing a sealing plate according to claim 1, comprising the steps of preparing a stock material comprising a thermoplastic resin as a matrix, a particulate substance which does not melt at the melting point of the matrix and a surfactant, heating that stock material to the melting point of the matrix and extruding the stock material from a molding die to form the embossed surfaces on both faces of the resin molding by utilizing the difference in the flowability between the matrix resin and the particulate substance, whereby the embossed surfaces are coated with a hydrophilic layer of the surfactant.

8. A process according to claim 7,
characterized by using a stock material comprising a polyethylene resin as the matrix and particles of crosslinked polyethylene resin as the particulate substance.

9. A process according to claim 8,
characterized by using a stock material comprising 60 ∼ 70 weight % of the matrix polyethylene resin, 30 ∼ 40 weight % of particles of crosslinked polyethylene resin, and 0,3 ∼ 10 weight % of an ester of fatty acid.

10. The process according to claim 7 or 8,
characterized by using a stock material comprising a polyethylene resin as the matrix resin and inorganic particulate substance such as sand as the particulate substance.

11. A process according to any of the claims 7 to 10,
characterized by forming the sealing plate as a continuous resin sheet, corrugating the sheet by forming transverse corrugations and forming one or more continuous ridges on both edges of the sheet in the longitudinal direction.

12. The process according to any of the claims 7 to 10,
characterized by forming said sealing plate as a flat continuous resin sheet and providing one or more continuous ridges on both edges of the sheet in the longitudinal direction.

## Patentansprüche

1. Eine geformte Abdichtungsplatte für Betonbauwerke, enthaltend einen thermoplastischen Kunststoff als Matrix und einen Partikelstoff, dessen Schmelzpunkt höher liegt als der Schmelzpunkt der Matrix,
dadurch gekennzeichnet, daß der Matrixkunststoff auf seinen beiden Seiten eine rauhe Oberfläche besitzt und daß die rauhen Oberflächen mit einer hydrophilen Schicht eines grenzflächenaktiven Stoffes überzogen sind.

2. Abdichtungsplatte gemäß Anspruch 1,
dadurch gekennzeichnet,
daß der Matrixkunststoff ein Polyäthylenharz und der Partikelstoff Teilchen eines vernetzten Polyäthylens, der einen höheren Schmelzpunkt als der Matrixkunststoff besitzt, aufweist.

3. Abdichtungsplatte nach Anspruch 2,
gekennzeichnet durch 60 ∼ 70 Gew% eines Matrix-Polyäthylenharzes, 30 ∼ 40 Gew% von Teilchen eines vernetzten Polyäthylenharzes und 0,3 ∼ 10 Gew% eines Fettsäureesters.

4. Abdichtungsplatte nach Anspruch 1,
gekennzeichnet durch ein Polyäthylenharz als Matrixmaterial und inorganische Teilchen wie beispielsweise Sand als Partikelstoff.

5. Abdichtungsplatte nach einem der Ansprüche 1 bis 4,
dadurch gekennzeichnet, daß die Abdichtungsplatte als fortlaufende Kunststoffbahn geformt wird, die mit Querwellungen versehen ist und an beiden Rändern der Bahn in Längsrichtung eine oder mehrere durchgehende Rippen aufweist.

6. Abdichtungsplatte nach einem der Ansprüche 1 bis 4,
dadurch gekennzeichnet, daß sie als fortlaufende ebene Kunststoffbahn geformt wird, die an ihren beiden Rändern in Längsrichtung eine oder mehrere fortlaufende Rippen aufweist.

7. Verfahren zur Herstellung einer Abdichtungsplatte nach Anspruch 1, welches die folgenden Schritte umfaßt:
Herstellen eines Ausgangsmaterials, das einen thermoplastischen Kunststoff als Matrixmaterial, einen Partikelstoff, der beim Schmelzpunkt des Matrixmaterials nicht schmilzt, und einen grenzflächenaktiven Stoff enthält; Erwärmen des Ausgangsmaterials auf den Schmelzpunkt des Matrixmaterials und Formpressen des Ausgangsmaterials aus einer Preßform zur Bildung der rauhen Oberflächen an beiden Seiten des Kunststofformstücks unter Verwendung des Unterschieds in der Fließfähigkeit zwischen dem Matrixkunststoff und dem Partikelstoff, wobei die rauhen Oberflächen mit einer hydrophilen Schicht des grenzflächenaktiven Stoffes überzogen werden.

8. Verfahren nach Anspruch 7,
gekennzeichnet durch Verwendung eines Ausgangsmaterials, das als Matrix ein Polyäthylenharz und als Partikelstoff Teilchen eines vernetzten Polyäthylenharzes enthält.

9. Verfahren nach Anspruch 8,
gekennzeichnet durch Verwendung eines Ausgangsmaterials, das 60 ∼ 70 Gew% des Matrix-Polyäthylenharzes, 30 ∼ 40 Gew% von Teilchen eines vernetzten Polyäthylenharzes und 0,3 ∼ 10 Gew% eines Fettsäureesters enthält.

10. Verfahren nach Anspruch 7 oder 8,
gekennzeichnet durch Verwendung eines Ausgangsmaterials, das als Matrixkunststoff ein Polyäthylenharz und als Partikelstoff eine anorganische Partikelsubstanz wie beispielsweise Sand enthält.

11. Verfahren nach einem der Ansprüche 7 bis 10,
gekennzeichnet durch Formen der Abdichtungsplatte als fortlaufende Kunststoffbahn, Wellen der Bahn durch Bilden von Querwellungen und Ausbilden von einer oder mehr fortlaufenden Rippen an beiden Rändern der Bahn in deren Längsrichtung.

12. Verfahren nach einem der Ansprüche 7 bis 10,
gekennzeichnet durch Formen der Abdichtungsplatte als ebene fortlaufende Kunststoffbahn und Vorsehen von einer oder mehreren fortlaufenden Rippen an beiden Rändern der Bahn in deren Längsrichtung.

## Revendications

1. Plaque d'étancheité moulée pour des structures en béton, comprenant une résine thermoplastique en tant que matrice et une substance particulaire ayant un point de fusion supérieur au point de fusion de la matrice, caractérisée en ce que la résine de matrice a des surfaces gaufrées sur ses deux faces, et en ce que les surfaces gaufrées sont revêtues d'une couche hydrophile faite d'un tensioactif.

2. Plaque d'étanchéité selon la revendication 1, caractérisée en ce que la matrice de résine comprend une résine de polyéthylène et la substance particulaire comprend des particules de polyéthylène réticulé ayant un point de fusion supérieur à celui de la résine de matrice.

3. Plaque d'étanchéité selon la revendication 2, caractérisée en ce qu'elle comprend 60 - 70 % en poids de résine de polyéthylène de matrice, 30 - 40 % en poids de particules de résine de polyéthylène réticulée, et 0,3 - 10 % d'un ester d'acide gras.

4. Plaque d'étanchéité selon la revendication 1, caractérisée en ce qu'elle comprend une résine de polyéthylène comme matériau de matrice, et des particules inorganiques telles que du sable comme substance particulaire.

5. Plaque d'étanchéité selon l'une quelconque des revendications 1 à 4, caractérisée en ce que la plaque d'étanchéité est formée sous forme d'une feuille continue de résine qui est munie d'ondulations transversales et a une ou plusieurs moulures prévues sur les deux bords de la feuille dans la direction longitudinale.

6. Plaque d'étanchéité selon l'une quelconque des revendications 1 à 4, caractérisée en ce qu'elle est formée sous forme de feuille plate continue de résine ayant une ou plusieurs moulures prévues sur les deux bords de la feuille dans la direction longitudinale.

7. Procédé de fabrication d'une plaque d'étanchéité selon la revendication 1, comprenant les étapes consistant à préparer une matière première comprenant une résine thermoplastique en tant que matrice, une substance particulaire qui ne fond pas au point de fusion de la matrice, et un tensioactif, à chauffer cette matière première au point de fusion de la matrice, et à extruder la matière première depuis une matrice de moulage pour former les surfaces gaufrées sur les deux faces du moulage en résine, en utilisant la différence de coulabilité entre la résine de matrice et la substance particulaire, de sorte que les surfaces gaufrées sont revêtues d'une couche hydrophile du tensioactif.

8. Procédé selon la revendication 7, caractérisé par l'utilisation d'une matière première comprenant une résine de polyéthylène en tant que matrice et des particules de polyéthylène réticulé en tant que substance particulaire.

9. Procédé selon la revendication 8, caractérisé par l'utilisation de 60 - 70 % en poids de résine de polyéthylène de matrice, 30 - 40 % en poids de particules de résine de polyéthylène réticulée, et 0,3 - 10 % d'un ester d'acide gras.

10. Procédé selon la revendication 7 ou 8, caractérisé par l'utilisation d'une matière première comprenant une résine de polyéthylène comme matériau de matrice, et des particules inorganiques telles que du sable comme substance particulaire.

11. Procédé selon l'une quelconque des revendications 7 à 10, caractérisé en ce qu'il consiste à former la plaque d'étanchéité sous forme d'une feuille continue de résine, à onduler la feuille en formant des ondulations transversales, et à former une ou plusieurs moulures sur les deux bords de la feuille dans la direction longitudinale.

12. Procédé selon l'une quelconque des revendications 7 à 10, caractérisé en ce qu'il consiste à former la plaque d'étanchéité sous forme d'une feuille continue plate de résine, et à former une ou plusieurs moulures sur les deux bords de la feuille dans la direction longitudinale.
